# EUROPEAN PATENT SPECIFICATION

(11) **EP 0 503 959 B1**
(45) Date of publication and mention of the grant of the patent: **07.06.1995**
(21) Application number: 92302177.8
(22) Date of filing: 13.03.1992
(51) Int. Cl.: A23K 1/16, A23K 1/18

(54) **Feed and feed additive for livestock, poultry and fish for increasing disease, pseudorabies resistance**
Futter und Futterzusatzmittel mit einer verbesserten Resistenz gegen Krankheiten wie Pseudorabies für Vieh, Geflügel und Fisch
Aliments et additifs alimentaires ayant une résistance améliorée aux maladies, telles que la pseudorabies, pour bétail, volaille et poisson

(30) Priority: 13.03.1991 JP 74841/91
(43) Date of publication of application: 16.09.1992
(73) Proprietor: NATIONAL FEDERATION OF AGRICULTURAL CO-OPERATIVE ASSOCIATIONS, Tokyo (JP)
(72) Inventor: Yabiki, Terutake, Sakura-shi, Chiba-ken (JP); Narahshi, Tsunao, Kashiwa-shi, Chiba-ken (JP); Okamoto, Toshihiro, Urayasu-shi, Chiba-ken (JP); Matsuo, Ken, Tsukuba-shi, Ibaraki-ken (JP)
(74) Representative: Cresswell, Thomas Anthony

(56) References cited:
- EP-A- 0 435 671
- WORLD PATENTS INDEX LATEST, Section Ch, week 8801, class B, accession no. 88-002675, Derwent Publications Ltd, London, GB; & JP-A-62 265 231 (ZENKOKU NOGYO KYODO) 18-11-1987
- BIOLOGICAL ABSTRACTS, vol. 93, 15th February 1992, abstract no. 36530,Philadelphia, PA, US; T. YABIKI et al.: "Influences of peptidoglycan and otherphysiologically active substances upon productivity of pigs",& JPN. J. SWINE SCI. 28(3): 225-230, 1991

## Description

The present invention relates to a feed and feed additive for livestock, poultry and fish for increasing disease resistance, such as resistance to pseudorabies, which comprise safe and natural substances having health improving and weight gaining effects.

Pseudorabies is an acute infectious disease caused by a kind of herpesvirus, which is called Aujeszky's disease derived from the name of the discoverer of the virus.

The disease exhibits a local and intense itching symptom on infected animals such as cattle, horses, goats, sheep, rabbits, dogs, cats, minks, foxes, rats and so forth except swine. The disease paralyses the medulla, pharynx and chaps, and causes salivation, dyspnea, abnormal heart beat and death. Reared swine are infected easily, but almost all of them recover from the disease. In a region of high humidity many infected swine of 30 to 80 kg. weight suffer the complication of pneumonia and die. Generally, the death rate due to the disease is high in piglets.

In livestock, poultry and fish, the economic loss caused by various diseases due to poor sanitary environment is very large. Especially in the field of swine breeding, the scale of which increases every year a 1% death rate or a few percent of product loss of dressed carcasses results in a serious loss.

For example, in a livestock farm having 100 female pigs, each of which produces 12 piglets twice a year, the yearly production of the farm will be 2,400 piglets in total. However, if each sow loses three piglets at each breeding, 600 piglets will be lost in total. If the unit price of the piglets is ¥10,000 when they are sold to a slaughter-house, this means a loss of ¥6,000,000 a year. Accordingly, control of the health of piglets is an important factor in the administration of a livestock farm.

When piglets exhibit a symptom of Aujeszky's disease, they must be immediately isolated from healthy piglets or disposed of in order to prevent further infection of the healthy piglets. Non-infected piglets kept in closely spaced hogpens must be transferred to a larger space. Infected sows, hogpens, utensils, feeds and so forth must be disinfected to prevent further infection. The infected piglets must be given a large amount of antibiotics, synthetic antimicrobial substances, vitamins, minerals or eutrophic medicines in order to prevent respiratory complications such as pneumonia.

Further, attenuated vaccines or inactive vaccines have been dosed experimentally.

Excessive medication does not show sufficient effect and causes a depreciation of commercial value of livestock products and a reduction in safety due to the presence of residual medicines.

Vaccination prevents diseases, but does not provide protection against wild strains of diseases.

In livestock farms, it is impossible to resolve all diseases (including pseudorabies) by using vaccination and antibiotic medicines. If it could be done, it would require many kinds of medicines and would be very expensive. It is known from JP 62-265 231 that a food additive comprising a peptidoglycane can reduce the incidence of infections in piglets.

The present invention has been developed considering the above situation and provides a feed and feed additive which can improve the health of livestock, poultry and fish, and therefore reduce the economic loss due to infectious diseases including pseudorabies by strengthening the physical functions and increasing the disease resistance of the livestock, poultry and fish.

It has been found that use of feed containing bile powder and bacteria powder containing peptidoglycan contributes to a reduction in the incidence of infection, and to an improvement in the productivity of dressed carcasses.

The present invention thus provides a feed additive for livestock, poultry and fish comprising bile powder and bacteria powder containing peptidoglycan.

The feed additive may also comprise at least one of animal blood plasma (serum) powder, garlic powder, licorice, licorice extract, and quillaja extract.

The present invention also provides a feed for livestock, poultry and fish comprising said feed additive.

The term "livestock" used herein includes, for example, swine, cattle, horses, goats, sheep, deer, dogs, cats and some rodents. The term "poultry" used herein includes, for example, chickens, hens, quail, turkeys and guinea fowl. The term "fish" used herein includes, for example, carp, rainbow trout, ayu (sweet fish), eel, tilapia, conger, salmon, trout, red seabream, yellow tail, flounder, globefish and prawn.

The bile powder may be obtained directly by pulverizing a bile element contained in cattle and swine gall bladders. Some is obtained by pulverizing the gall bladders after extraction by an alcoholic extraction method. The principal ingredients contained in the aforementioned feed additives are cholic acid and deoxycholic acid. About 50% of cholic acids is contained in the bile powder.

Various refined products of cholic acid, contained in a bile powder composition, have been used as medicine for human gall and a secretory accelerator of digestive enzymes and digestive fluids.

The bile powder has the same or better effect against viruses than cholic acids obtained by extracting or refining the bile powder. Therefore, there is more economic merit in using the bile powder than in using cholic acids extracted or refined from bile powder.

The cell wall of Gram positive bacteria contains a peptidoglycan (hereinafter, the abbreviation "PG" will be used) of sack form which mainly comprises polysaccharides or teico acids bonded through covalent bonding. The cell wall of gram positive bacteria circumscribes a cytoplasmic membrane to protect its function from outer stimulant objects. Especially, a peptidoglycan portion thereof is important for increasing an immune effect and supports its structural form.

In the peptidoglycan (PG), tetra-peptides called "peptide subunits" form a net mesh structure between glycan chains consisting of a reciprocal polymer of N-acetylglucosamine with N-acetylmuramic acid. The peptidoglycan has various bio-activities and N-acetylmuramyl-L-Ala-D iso Glu (MDP) is the minimum effective structure which supports biological response modifier functions. The PG and MDP activate T cells and B cells, but do not function directly on lymphocytes. However, they activate macrophages (Mφ) to have a lymphocyte activating factor (IL-1) emitted as a primary target. Consequently, the T cell is activated to activate the B cell. Accordingly, the immune effect on the livestock, poultry and fish can be obtained by adding gram positive bacteria to feed, the capsule on the surface of the gram positive bacteria being eliminated to expose the peptidoglycan.

Licorice, licorice extracts, garlic powder, quillaja extract and animal blood (serum) powder are auxiliary ingredients which can be used for increasing the disease resistance effect achievable with the mixture of bile powder and peptidoglycan-containing bacteria.

Licorice (Glycyrrhizae glabra) is a plant of the pulse family, of which the root can be dried and crushed or pulverized for use in accordance with the invention. An extract thereof is a dark brown and adhesive extract having a particularly sweet and bitter flavour. However, its colour varies according to the extracting process. Its main composition is a glycyrrhetic acid having a natural killer activity and an interferon inductivity, of which effect against human simplex herpes virus is widely recognized. The licorice powder and extract thereof absorbed in other foods can be added to livestock feed.

Garlic powder is made from garlic (Allium Scorodoprasum L. var. viviparum Regal) by drying and pulverizing the cloves. The garlic powder contains a glycoside of glycominar. When it is hydrolyzed, a kind of volatile oil containing sulfur and diaryldisulfide, an aromatic substance, is obtained. Also, the garlic powder contains allysine and has physiological activity such as an improvement of intestinal absorption of vitamin B₁.

Quillaja extract is a white to light yellowish brown powder or brown to dark pasty substance having a surface activity and has been used as a detergent and foaming agent for a long time. The main composition of the quillaja extract is an oligoglycoside such as triterpenoid and steroid. An extract of Quillaja saponaria molina, an evergreen tree of the rose family, is mainly used to obtain the quillaja extract. When the quillaja extract is employed, the quillaja powder can be mixed in a feed directly, and a pasty quillaja powder can be absorbed by the feed.

Animal blood plasma (serum) contains an important immunoglobulin, with which animals protect themselves from invading pathogenic microbes. The immunoglobulin is a kind of protein which is capable of restraining functions of invading pathogenic microbes or killing them.

Generally, new born animals such as baby pigs and baby cattle have an extremely low capacity for producing immunoglobulin while suckling. Therefore, the immunoglobulin received from the initial milk of the mother animal is absorbed through the intestinal tract of the baby animal and distributed throughout the whole body by the blood so as to protect the body from microbes or viruses.

In some animals, the immunoglobulin is transmitted from the placenta of the mother animal to the blood of the baby animal through the umbilical cord so as to protect the baby animal when it is born.

The immunoglobulin contained in orally dosed blood plasma (serum) as a feed additive is absorbed through the intestinal tract of the baby animal and distributed throughout the whole body by the blood so as to protect the body from viruses just like the immunoglobulin contained in the initial milk of the mother animal.

The immunoglobulin not absorbed through the intestinal tract covers the surface of the intestinal canal mucosa so as to protect the intestinal tract against various invading viruses.

The feed additive of the present invention suitably contains 0.0001 to 0.01% by weight of PG per weight per cent of bile powder in the feed additive. Additionally, the feed additive may contain 0.1 to 2.0 % by weight of garlic powder and/or 0.001 to 0.1 % by weight of glycyrrhetic acid value of licorice or licorice extract and/or 0.001 to 0.01 % by weight of triterpenoid (Quillaja saponin) value of quillaja extract per weight per cent of bile powder in the feed additive.

When these feed additives are mixed in a feed directly, the feed additive content suitably is 0.01 to 2.0 % by weight, preferably 0.05 to 0.5 %, and the content of blood plasma powder suitably is 0.01 to 5.0 %, preferably 0.1 to 0.5 % depending upon such factors as the weight and day-old age of the livestock, poultry or fish and the palatability of the feed.

A feed comprising the feed additive of the present invention suitably contains 0.0001 to 0.01 % by weight of PG per weight per cent of bile powder in the feed. Additionally the feed may contain 0.1 to 2.0 % by weight of garlic powder and/or 0.001 to 0.1 % by weight of glycyrrhetic acid value of licorice or licorice extract and/or 0.001 to 0.01 % by weight of triterpenoid (Quillaja saponin) value of quillaja extract per weight per cent of bile powder in the feed.

Also, other commercial materials sold as a feed or feed additive for livestock, poultry and fish can be used for preparing the mixture of bile powder and blood plasma powder. Vitamins and minerals of course, may be mixed or added as well as other commercial materials.

The feed and feed additive for the livestock, poultry and fish may be of powder, grain or liquid form. They can be used selectively in accordance with the feeding condition and installations of the farm.

Pseudorabies or other infectious diseases can be prevented by incorporating the feed additive of the present invention into a feed, and the health, weight gain effect and productivity of the livestock, poultry and fish can be improved.

The feed additive and feed comprising the feed additive according to the present invention are safe and do not cause secondary harm due to environmental pollution.

The following Examples illustrate the present invention.

### Example 1

Feed additives A (with 30 % of bile powder) and B (with 30 % of bile powder and 0.1 % of PG) were prepared and each 0.2 % thereof were added in a commercial swine feed.

In a livestock farm infected by pseudorabies virus, wherein swine exhibited coughing, diarrhoea and a high death rate, a group of 10 piglets of two-weeks age borne by a dam pig infected by pseudorabies positive virus were fed with a feed with common feed additive A containing bile powder for 60 days. A similar group of 10 piglets were fed with a feed with feed additive B containing bile powder and PG according to the present invention for 60 days. The diarrhoea rate (faeces condition), weight gain and survival rate of both groups were compared with those of a similar group of 10 piglets fed with common commercial feed for the same period, with the results shown in Table 1.

We can see from the table that those piglets fed with a feed with feed additive B containing bile powder and PG according to the present invention showed an excellent pseudorabies resistance in comparison with those fed with a common feed or fed with a feed with common feed additive A containing only bile powder.

### Example 2

Feed additives A (with 25.0 % of bile powder), B (with 0.1 % of PG), C (with 25.0 % of bile powder, 0.1 % of PG and 1.5 % of licorice and D (with 25.0 % of bile powder, 0.1 % of PG, 10 % of garlic powder, and 0.6 % of licorice) were prepared and each 0.2 % thereof were added to a common commercial feed.

In a livestock farm having 90 sows showing about 75 % of pseudorabies positive rate, coughing, diarrhoea and a high death rate, three groups of 20 pseudorabies positive piglets of 50 to 60 days old were fed with the same common commercial feeds respectively containing the feed additives A, B, C or D until the time of shipping to a slaughterhouse, at which time death rate and dressed carcass rate were compared with those of 20 piglets fed with a common commercial feed for the same period. The results are shown in Table 2.

We can see from Table 2 that the death rates in the groups of piglets respectively fed with a feed with feed additive C or D containing bile powder and PG are lower than those fed with a common feed, a feed with feed additive A containing bile powder and a feed additive B containing only PG by 5.0 to 20.0 %.

Regarding the dressed carcass rate, those fed with a feed with the feed additive C or D showed an increase of 57.1 % to 71.4 % more in comparison to those fed with a common feed, and also, showed an increase of 22.2 % to 33.3 % in comparison to those fed with feed with the additive A or B.

A feed containing the feed additives A with bile powder and another containing the feed additive B with PG increase a pseudorabies resistance, but a feed containing the feed additives C or the feed additive D according to the present invention has much higher pseudorabies resistance.

### Example 3

Feed additives A (with 12 % of bile powder), B (with 1 % of PG), C (12.0 % of bile powder, 0.1 % of PG and 10.0 % of garlic powder) and D (12.0 % of bile powder, 0.1 % of PG, 12.0 % of garlic powder and 0.5 % of licorice) according to the present invention were prepared. These feed additives were respectively added in common commercial swine feeds by 0.2 %.

Group 1 of 10 pseudorabies positive sows were fed with a common commercial feed without any additive from copulation to estrus through parturition and weaning periods.

Group 2 of a similar group of 10 sows were fed with a feed containing feed additive A during the same period.

Group 3 of a similar group of 10 sows were fed with a feed containing feed additive B during the same period.

Group 4 of a similar group of 10 sows were fed with a feed containing feed additive C according to the present invention during the same period.

Group 5 of a similar group of 10 sows were fed with a feed containing feed additive D according to the present invention during the same period.

The total number of piglets born dead or aborted, average of new piglets, average of weaned piglets and number of days from weaning to next estrus were compared on the five groups, with the results shown in Table 3.

Table 3 shows a clear difference between the groups 1 to 3 and other groups 4 and 5 fed with a feed containing feed additive C or D according to the present invention as follows:

In both cases of a feed additive A containing 12 % of bile powder and a feed additive B containing 0.1 % of PG, the total number of piglets born dead or aborted 3 was reduced to 1 showing a reduction of 33.3%. The average number 9.6 of new piglets was increased to 10.3 and 10.8 showing increases of 7.3 % and 12.5 %, respectively. The average number 6.8 of weaned piglets was increased to 9.2 and 10.1 showing increases of 35.2 % and 48.5 %, respectively. The number of days until next estrus was shortened from 6 to 12 (average: 9) to 6 to 10 (average 8, a change of -11.1 %) and 5 to 10 (average 7.5, a change of -16.7 %), respectively.

However, in both cases of the feed additives C and D according to the present invention the number 3 of new piglets born dead or aborted was reduced to zero showing an improvement of 100 %. The number 9.6 of new piglets was increased to 11.2 and 13.5 showing increases of 16.7 % and 40.6 % respectively. The number 6.8 of weaned piglets was increased to 10.4 and 11.9 showing increases of 52.9% and 75.0 % respectively. The number of days until next estrus was reduced to 4 to 9 (average: 6.5) and 4 to 7 (average: 5.5) showing reduction of 27.8 % and 38.9 % respectively. This is an effect of the feed additive according to the present invention. Especially, the feed additive D containing 12 % of bile powder, 0.1 % of PG, 12.0 % of garlic powder and 0.5 % of licorice shows the best result.

It is possible to induce the estrus season by dosing with hormones such as prostaglandin, but if a feed containing the feed additive according to the present invention is used, the estrus season can be induced without dosing with hormones.

### Example 4

Feed additives A (with 12.0 % of bile powder and 0.2 % of PG), B (with 12.0 % of bile powder, 0.2 % of PG and 20.0 % of garlic powder), C (with 12.0 % of bile powder, 0.2 % of PG and 1.0 % of quillaja extract) and D (with 12.0 % of bile powder, 0.2 % of PG, 20.0 % of garlic powder and 5.0 % of licorice) were prepared and each 0.2 % thereof were added in a common commercial feed.

In a livestock farm showing a high death rate and low productivity, four groups of 10 piglets of 10 to 15 days old were fed with feeds containing the feed additive A,B,C or D for 50 days. Then, the faeces, weight gain and survival rate of the groups of piglets were compared with another group of 10 piglets fed with a common feed, with the results shown in Table 4.

In this case, those groups of piglets fed with a feed with feed additive A, B, C or D showed an excellent effect in comparison to other group fed with a common feed. A feed additive with bile powder and PG showed a sufficient effect, but a better effect was obtained by using a feed with feed additive with bile powder, PG, garlic powder and licorice.

### Example 5

Feed additives A (with 16 % of bile powder and 0.01 % of PG) and B (with 15 % of bile powder, 0.01 % of PG and 1 % of licorice) were prepared and each 0.5 % thereof were added in a common commercial feed.

Three groups of 20 new born chickens of the Shaver layer family were fed with a common commercial feed, a feed with feed additive A and another with feed additive B respectively for 35 days. Regarding the productivity of liquid immunity, immunoglobulin values IgG of the groups were measured by a single radial immunodiffusion method and compared with each other.

Also, a comparison was made on the death rates of the groups observed during the above experiment, with the results shown in Table 5.

The group fed with a feed with additive A shows a better result than the group fed with a common commercial feed. The group fed with a feed with feed additive B shows a much better result than others.

### Example 6

A feed additive containing 12.0 % of bile powder, 0.1 % of PG and 10.0 % of garlic powder was prepared and 0.1 % thereof was added to a commercial feed for rainbow trout. Two groups of 11 rainbow trout were fed with a feed with the feed additive and with a commercial feed respectively for three weeks. The water temperature of the tank was 15°C. and 12 g. of feed was given daily to each group. Then, a lysozyme activity, an index of disease resistance of fish, was searched for, with the results shown in Table 6.

The group of rainbow trout fed with a feed with a feed additive according to the present invention showed a better disease resistance in comparison to the other group fed with a commercial feed. The former group showed a lysozyme activity 14 % higher than the latter.

**Table 1**

| group | weight gain | diarrhoea | survival rate (%) |
|---|---|---|---|
| common feed | 100 | 100 | 60(6/10) |
| feed with feed additive A containing bile powder | 109 | 83 | 90(9/10) |
| feed with feed additive B containing bile powder and PG according to the present invention | 114 | 78 | 100(10/10) |
| weight gain: average weight gain of 6 piglets fed with a common feed and survived. diarrhoea: each scored 1 for watery feces, and averages were calculated considering an average of 6 survived for 60 days as a score of 100. | | | |

**Table 2**

| (tested: groups of 20 piglets) | | |
|---|---|---|
| group | death rate ( %/ dead) | dressed carcass (% of total) |
| common feed | 20.0/4 | 35.0 |
| common feed + 0.2 % feed additive A with bile powder 25.0 % | 10.0/ 2 | 45.0 (+ 28.6 %) |
| common feed + 0.2 % feed additive B with PG 0.1 % | 5.0/1 | (+ 28.6 %) |

| present invention | | |
|---|---|---|
| common feed + 0.2 % feed additive C with bile powder 25.0 %, PG 0.1 %, licorice 1.5 % | 0.0/0 | 55.0 (+ 57.1 %) (+22.2 %(comparing with additives A & B) |
| common feed + 0.2 % feed additive D with bile powder 25.0 %, PG 0.1%, garlic powder 10%, licorice 0.6 % | 0.0/0 | 60.0 (+ 71.4 %) (+33.3 % comparing with additives A & B) |

**Table 3**

| (tested: groups of 10 sows) | | | | |
|---|---|---|---|---|
| group | piglets born dead or aborted (%change) | average piglets born (% change) | weaned piglets (% change) | day to next estrus (average: % change) |
| common feed | 3 | 9.6 | 6.8 | 6 to 12 (9) |
| common feed + 0.2% feed additive A with bile powder 12% | 1 (-33.3%) | 10.3 (+7.3%) | 9.2 (+35.2%) | 6 to 10 (8:-11.1% |
| common feed + 0.2% feed additive B with PG 0.1% | 1 (-33.3%) | 10.8 (+12.5%) | 10.1 (+48.5%) | 5 to 10 (7.5:-16.7%) |

| present invention | | | | |
|---|---|---|---|---|
| common feed + 0.2% feed additive C with bile powder 12%, PG 0.1%, garlic powder 10.0% | 0 (-100%) | 11.2 (+16.7%) | 10.4 (+52.9%) | 4 to 9 (6.5:-27.8%) |
| common feed + 0.2% feed additive D with bile powder 12%, PG 0.1%, garlic powder 12.0%, licorice 0.5% | 0 (-100%) | 13.5 (+40.6%) | 11.9 (+75.0%) | 4 to 7 (5.5:-38.9%) |

**Table 4**

| (tested: groups of 10 piglets) | | | |
|---|---|---|---|
| group | weight gain | diarrhoea (%) | survival rate % (survived) |
| common feed | 100 | 100 | 70 (7/10) |

| present invention | | | |
|---|---|---|---|
| common feed + 0.2% feed additive A with bile powder 12.0%, PG 0.2% | 118 | 34 | 100 (10/10) |
| common feed + 0.2% feed additive B with bile powder 12.0 %, PG 0.2%, garlic powder 20.0% | 114 | 42 | 100 (10/10) |
| common feed + 0.2% feed additive C with bile powder 12.0%, PG 0.2%, quillaja extract 1.0% | 116 | 35 | 100 (10/10) |
| common feed + 0.2% feed additive D with bile powder 12.0%, PG 0.2%, garlic powder 20.0%, licorice 5.0% | 120 | 28 | 100 (10/10) |
| weight gain: An average weight gain for 50 days of 7 survivors was considered as a score of 100. diarrhoea: each scored 1 for watery faeces, and averages were calculated considering an average of 7 survived for 50 days as a score of 100. | | | |

**Table 5**

| (tested: groups of 20 chickens) | | |
|---|---|---|
| group | Serum IgG content | death rate % (dead) |
| common feed | 156 (100%) | 15.0 (3/20)* |

| present invention | | |
|---|---|---|
| common feed + 0.5% feed additive A bile powder 16%, PG 0.01% | 258 (165%) | 0.0 (0/20) |
| common feed + 0.5% feed additive B bile powder 15%, PG 0.01 %, licorice 1% | 289 (185%) | 0.0 (0/20 |

| | | |
|---|---|---|
| * Three died of infectious Bursal Disease, IBD. | | |

**Table 6**

| | lysozyme activity (»g/ml) |
|---|---|
| common feed | 1.15 |
| feed with feed additive according to the present invention | 2.76 (+ 14.0 %) |

## Claims

1. A feed additive for livestock, poultry and fish which comprises bile powder and a bacteria powder containing peptidoglycan.

2. A feed additive according to claim 1 which also comprises at least one of animal blood plasma (serum) powder, garlic powder, licorice, licorice extract and quillaja extract.

3. A feed for livestock, poultry and fish comprising a feed additive as claimed in claim 1 or 2.

## Patentansprüche

1. Futterzusatzmittel für Vieh, Geflügel und Fisch, welches Gallenpulver und ein Bakterienpulver umfaßt, das Peptidoglykan enthalt.

2. Futterzusatzmittel gemäß Anspruch 1, welches außerdem mindestens eines aus Tierblutplasma-(Serum)-Pulver, Knoblauchpulver, Lakritze, Lakritzextrakt und Quillajaextrakt umfaßt.

3. Futter für Vieh, Geflügel und Fisch, umfassend ein Futterzusatzmittel nach Anspruch 1 oder 2.

## Revendications

1. Additif alimentaire pour le bétail, la volaille et les poissons, comprenant de la poudre de bile et une poudre bactérienne contenant du peptidoglycanne.

2. Additif alimentaire selon la revendication 1, qui comprend également au moins l'un parmi la poudre de plasma (sérum) sanguin animal, la poudre d'ail, la réglisse, l'extrait de réglisse et l'extrait de quillaya.

3. Aliment pour le bétail, la volaille et les poissons, comprenant un additif alimentaire tel que revendiqué à la revendication 1 ou 2.
